# EUROPÄISCHE PATENTSCHRIFT

(11) **EP 0 433 658 B1**
(45) Veröffentlichungstag und Bekanntmachung des Hinweises auf die Patenterteilung: **15.04.1998**
(21) Anmeldenummer: 90121866.9
(22) Anmeldetag: 15.11.1990
(51) Int. Cl.: G02B 21/00, G02B 21/36

(54) **Inverses Mikroskop mit integriertem Photostrahlengang**
Inverse microscope with integrated photographic light path
Microscope inverse avec trajectoire integrée pour photographie

(30) Priorität: 18.11.1989 DE 3938413
(43) Veröffentlichungstag der Anmeldung: 26.06.1991
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Meyer, Manfred, W-7920 Heidenheim (DE); Geis, Walter, Dr., W-7080 Aalen (DE)

(56) Entgegenhaltungen:
- DE-A- 3 432 635
- DE-A- 3 744 156
- US-A- 4 440 475
- US-A- 4 770 520

## Beschreibung

In den bisher bekannten inversen Mikroskopen mit integriertem Photostrahlengang sind der in der Regel in einer waagerechten Ebene verlaufende Photostrahlengang und der zumindest abschnittsweise ebenfalls waagerecht verlaufende Beobachtungsstrahlengang in zwei übereinanderliegenden Ebenen geführt. Die Trennung von Photostrahlengang und Beobachtungsstrahlengang wird hierzu im Bereich des senkrecht verlaufenden Gesamtstrahlenganges unterhalb des Objektivs des Mikroskops vorgenommen. Geräte mit diesem Aufbau sind beispielsweise in der DE-PS 26 40 974 und in der DE-OS 34 32 635 beschrieben.

Dieser Aufbau hat zur Folge, daß der Tisch des Mikroskops relativ hoch liegt, da viel Platz unterhalb des Objektivs für die zum Teil schaltbaren Strahlteilerprismen benötigt wird. Außerdem muß bereits der Photostrahlengang eine bestimmte Mindesthöhe über dem Geräteboden besitzen, damit unter der Kamera z.B. ein Winde-Gehäuse eingesetzt werden kann. Wenn der Photostrahlengang in der untersten Ebene des Gerätes verläuft, baut der Objektivrevolver und damit auch der Tisch des Mikroskops entsprechend sehr hoch.

Unter ergonomischen Gesichtspunkten sollte der Tisch des Mikroskops jedoch möglichst so tief liegen, daß die Bedienperson das aufgelegte Präparat mit aufgestützten Armen manipulieren kann. Das ist bei den bekannten Geräten nicht ohne weiteres möglich.

In der DE-OS 34 32 635 ist bereits vorgeschlagen worden, den Photostrahlengang in der Ebene oberhalb des Beobachtungsstrahlenganges zu führen. Dies bedingt jedoch, daß sich Beobachtungsstrahlengang und Photostrahlengang nochmals kreuzen, wodurch sich andere, konstruktive Einschränkungen ergeben. Zudem ist der Beobachtungsstrahlengang in den bekannten Geräten mehrfach, bis zu 5 x umgelenkt und diese vielen Strahlumlenkungen machen das Gerät relativ aufwendig und wirken sich außerdem negativ auf die Bildqualität aus.

Aus dem Firmenprospekt "Nikon Epiphot" der Nippon Kogaku KK ist ein inverses Mikroskop mit integriertem Photostrahlengang bekannt, dessen Beobachtungsstrahlengang durch einen einzigen Reflektor aus dem unterhalb des Objektivs senkrecht verlaufenden Gesamtstrahlengang schräg nach oben in Richtung auf den Betrachter umgelenkt wird. Der Winkel, unter dem der Beobachtungsstrahlengang verläuft, ist mit dem Einblickwinkel in die Okulare identisch.

Aber auch dieses bekannte Gerät besitzt eine relativ große Bauhöhe im Bereich des Tisches, da hier wie bei den beiden erstgenannten Geräten der Photostrahlengang in der Ebene unterhalb des die Strahlaufteilung zwischen Beobachtungsstrahlengang und Photostrahlengang bewirkenden Prisma verläuft.

Aus der US-A 4 770 520 ist ein weiteres inverses Mikroskop bekannt, in dem der nach unten gerichtete, vom Objektiv kommende Strahlengang durch einen einzigen Spiegel diagonal nach oben in Richtung auf den Betrachter gelenkt ist. In dem diagonal nach oben gerichteten Strahlengang wird ein erstes Zwischenbild erzeugt, das von einem nachfolgenden Zoomsystem in ein zweites Zwischenbild innerhalb der Okulare abgebildet ist. Ein schaltbarer Spiegel ist zwischen der Zoomlinse und den Okularen angeordnet, durch den der Beobachtungsstrahlengang zu einem horizontalen Kameraausgang unterhalb der Okulare umgelenkt werden kann. Mit diesem Mikroskop ist jedoch eine gleichzeitige visuelle Beobachtung und Photographie bzw. Aufzeichnung mit einer Kamera nicht ohneweiteres möglich. Außerdem muß bei rein visueller Beobachtung die Formatstrichplatte - damit diese bei der Beobachtung nicht stört - manuell aus dem Strahlengang entfernt werden, was für den Bedienungskompfort unbefriedigend ist.

Es ist daher das Ziel der Erfindung, ein inverses Mikroskop mit integriertem Photostrahlengang zu schaffen, daß sich durch einen einfachen und kompakten Aufbau mit möglichst wenigen Strahlungsumlenkungen für den Beobachtungsstrahlengang auszeichnet, einen möglichst tiefliegenden Objekttisch besitzt und gleichzeitig bezüglich seines Bedienungskompforts verbessert ist.

Diese Aufgabe wird durch die im Anspruch 1 angegebenen Maßnahmen gelöst.

Da die Ausspiegelung des Photostrahlenganges aus dem bereits diagonal nach oben in Richtung auf den Beobachter verlaufenden Beobachtungsstrahlengang heraus erfolgt, braucht unterhalb des Objektivs nur sehr wenig Optik angeordnet zu werden. Entsprechend bildet der einzige, den Beobachtungsstrahlengang umlenkende Reflektor den tiefsten Punkt im Strahlengang des Gerätes, was eine besonders niedrice Bauhöhe für den Objektivrevolver und den Tisch zur Folge hat. Dennoch läßt sich ohne weiteres eine ausreichende Mindesthöhe für den Photostrahlengang ohne Überkreuzung mit Beobachtungsstrahlengang erzielen.

Schließlich befindet sich das den Photostrahlengang ausspiegelnde optische Element, d.h. der Strahlteiler relativ nahe an einer Zwischenbildebene. Die räumliche Nähe dieses in der Regel schaltbaren Strahlteilers zur Zwischenbildebene erleichtert es, ihn mit einer in der Zwischenbildebene angeordneten Formatstrichplatte oder Fokussierhilfe mechanisch zu koppeln.

Der Beobachtungsstrahlengang verläuft zweckmäßig unter dem Einblickwinkel von vorzugsweise 45° gegen die Vertikale. Abgesehen, daß bei dieser Dimensionierung keine weitere Umlenkung des Beobachtungsstrahlenganges erforderlich ist, hat sich dieser Winkel auch unter ergonomischen Gesichtspunkten als zweckmäßig erwiesen, da dann das Präparat auf der Tischfläche im Blickfeld des Beobachters liegt und keine Kopfbewegungen erfordert.

Es ist vorteilhaft, wenn das optische Element zur Ausspiegelung des Photostrahlenganges ein Strahlteilerprisma ist, durch das der Beobachtungsstrahlengang geradlinig hindurchtritt. In diesem Falle ist es möglich, mit einer einzigen Umlenkung des Beobachtungsstrahlenganges auszukommen.

Dieses Teilerprisma kann gleichzeitig den Photostrahlengang durch nochmalige Reflexion, vorzugsweise in die gewünschte horizontale Richtung, umlenken. Insoweit diese Umlenkung durch innere Totalreflexion an der Eintrittsfläche des Prismas erfolgt, ist es zweckmäßig, für das Prisma ein Glas mit einem Brechungsindex von wenigstens 1,55 zu wählen. Es ist dann nämlich möglich, ohne Verspiegeln der betreffenden Prismenfläche den Strahlengang im Winkel von 45° umzulenken, auch wenn der volle Öffnungswinkel des Strahlenganges bis zu 9° beträgt.

Inverse Mikroskope besitzen neben dem integrierten Photostrahlengang oft einen weiteren Bildausgang für Zusatzgeräte, wie z.B. eine Fernsehkamera. Die Ausspiegelung in diesen Ausgang erfolgt zweckmäßig durch ein zweites Strahlteilerprisma, durch das der Beobachtungsstrahlengang ebenfalls geradlinig hindurchtritt und das den weiteren Teilstrahlengang durch zweimalige Reflexion in die Vertikale umlenkt. Vertikale Bildausgänge eignen sich insbesonders unter dem Gesichtspunkt mechanischer Stabilität gut für Zusatzgeräte, da sich dann das Gewicht der Zusatzgeräte durch das Mikroskopgehäuse selbst abfangen läßt.

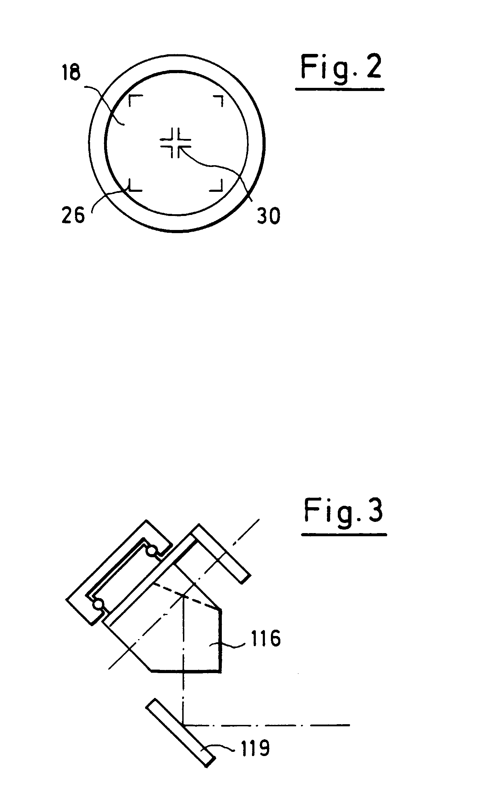

Weitere Vorteile der Erfindung ergeben sich aus der nachfolgenden Beschreibung eines Ausführungsbeispiels anhand der Figuren 1-3 der beigefügten Zeichnungen.
- Figur 1: Ist eine Schnittzeichnung eines inversen Mikroskops in einer vertikalen Ebene und zeigt den optischen und mechanischen Aufbau des Gerätes;
- Figur 2: zeigt die Formatstrichplatte (18) aus Figur 1 in Aufsicht in vergrößertem Maßstabe;
- Figur 3: ist eine Skizze, die eine alternative Ausfüshrungsform für den Strahlteiler (16) in Figur 1 darstellt.

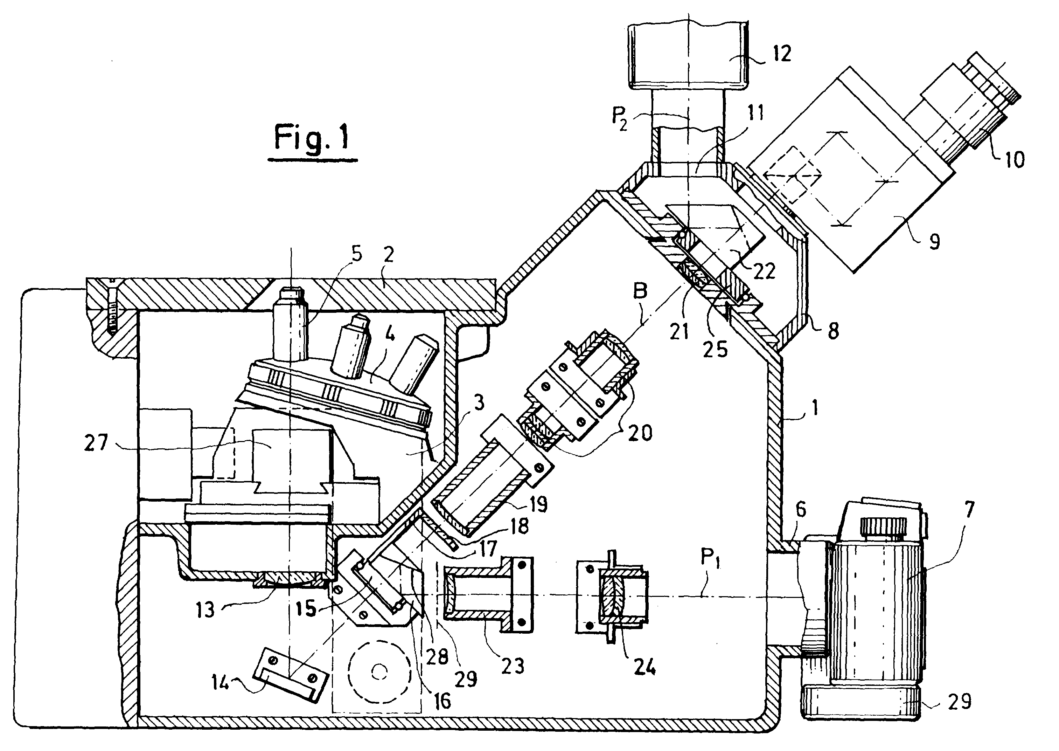

Das in Figur 1 dargestellte Mikroskop besitzt ein geschlossenes, im wesentlichen U-förmiges Gehäuse (1), auf dem ein Präparattisch (2) so befestigt ist, daß er die beiden U-förmigen Schenkel des Gehäuses verbindet. Im Ausbruch zwischen den U-förmigen Schenkeln ist der vertikal verschiebbare Träger (3) für einen fokussierbaren Objektivrevolver (4) gelagert. In der Darstellung nach Figur 1 befindet sich das Objektiv (5) in Arbeitstellung.

In dem vertikal nach unten verlaufenden Strahlengang in Lichtrichtung hinter dem Objektiv (5) folgt auf einen nicht näher dargestellten Auflichtreflektorschieber (27) zur Einspiegelung des Beleuchtungsstrahlenganges die Tubuslinse (13) des Mikroskops, die in Verbindung mit den auf Schnittweite unendlich korrigierten Objektiven ein erstes Zwischenbild erzeugt. Dieses Zwischenbild entsteht an der Stelle, an der sich die nachher noch beschriebene Formatstrichplatte (13) befindet.

Auf die Tubuslinse (13) folgt unmittelbar ein Reflektor (14), der den Beobachtungsstrahlengang unter einem Winkel von ca. 45° diagonal nach oben in Richtung auf den Betrachter umlenkt. Im bereits aufwärts gerichteten Beobachtungsstrahlengang zwischen dem Reflektor (14) und der Zwischenbildebene ist ein Teilerprisma (16) angeordnet, das den zu einer Kamera (7) am Photoausgang (6) an der Frontseite des Gerätes verlaufenden, mit P1 bezeichneten Photostrahlengang von dem Beobachtungsstrahlengang B trennt. Hierbei wird der Photostrahlengang nach Reflexion an der Teilerfläche (28) des Prismas (16) nochmals an der Lichteintrittsfläche des Prismas (16) durch innere Totalreflexion umgelenkt und verläuft danach waagerecht. Das auch im Photostrahlengang entstehende Zwischenbild (29) wird mittels einer Feldoptik (23) und einer darauffolgenden Abbildungsoptik (24) in die Bildebene des Kameragehäuses (7) abgebildet.

Das Strahlteilerprisma (16) ist im aufwärts verlaufenden Strahlengang soweit vom Reflektor (14) weg nach oben verlegt, daß der Photostrahlengang genügend Bodenfreiheit besitzt, um unter das Kameragehäuse (7) auch noch ein Winder-Gehäuse (29) anzusetzen.

Das Prisma (16) ist auf einem Schieber (15) befestigt, der mehrere Schaltstellungen besitzt. Während das Teilerprisma (16) eine Strahlteilung im Verhältnis von z.B. 50:50 zwischen Beobachtungsstrahlengang und Photostrahlengang bewirkt, ist in einer der Schaltstellungen das Strahlteilerprisma (16) durch eine entsprechend dicke Glasplatte ersetzt, die alles Licht in den Beobachtungsstralengang gelangen läßt. Auf weiteren Schaltplätzen des Schiebers (15) können Strahlteilerprismen mit anderen Teilerfaktoren oder ein Spiegel angeordnet werden, der alles Licht in den Photostrahlengang reflektiert.

Da die Basisfläche des Prisma (16), die den Photostrahlengang umlenkt, gleichzeitig als Lichteintrittsfläche dient und somit eine Verspiegelung nicht erfolgen kann, ist durch eine geeignete Auswahl des Prismenmaterials gewährleistet, daß auch für Öffnungswinkel von 9° der Grenzwinkel für Totalreflexion an der Prismenfläche nicht unterschritten wird. Hierfür ist erforderlich, daß das Glas mindestens eine Brechzahl von 1,55 besitzt. Im konkreten Ausführungsbeispiel wurde für das Prisma das Glas BAK4 mit einer Brechzahl von n (d) = 1,57 gewählt. Dort ergibt sich der Grenzwinkel für die Totalreflexion zu 39,6°, so daß für die beschriebene 45°-Umlenkung aus dem Beobachtungsstrahlengang in den Photostrahlengang der volle Öffnungswinkel sogar mehr als 10° betragen kann.

Am Schieber (15) ist über einen Verbindungsarm (17) gleichzeitig die Fassung für eine Formatstrichplatte (18) befestigt. Diese Formatstrichplatte (18) befindet sich in der von der Tubuslinse (13) erzeugten Zwischenbildebene im Beobachtungsstrahlengang. Die Strichplatte trägt außerdem noch eine Fokussierhilfe (30), mit deren Hilfe sichergestellt werden kann, daß die Objektebene scharf in die Filmebene der Kamera (7) abgebildet wird. Die Strichtplatte (18) ist über den Verbindungsarm (17) bewegungsmäßig mit dem Prisma (16) gekoppelt und deshalb nur bei eingeschaltetem Photostrahlengang im Beobachtungsstrahlengang sichtbar.

Im Strahlengang hinter der Strichplatte (18) folgt in Lichtrichtung gesehen wieder eine Feldoptik (19) sowie eine weitere Optik (20), die einen telezentrischen Strahlengang erzeugt.

Auf die im oberen Teil geneigte Stirnfläche des Gehäuses (1) des Mikroskops ist ein abnehmbarer Wechseltubus (8) gesetzt. Dieser Wechseltubus (8) ist mit einer Aufnahmeschwalbe an das Gehäuse (1) adaptiert, trägt den Binokulartubus (9) des Mikroskops und besitzt außerdem einen weiteren Ausgang (11) für Zusatzgeräte wie die in Figur 1 teilweise sichtbare Fernsehkamera (12). Der mit P2 bezeichnete Strahlengang für dieses Zusatzgerät ist aus dem Beobachtungsstrahlengang P1 in die Vertikale ausgespiegelt. Hierzu ist in Tubus (8) hinter der Tubuslinse (21), die das Zwischenbild in den Okularen (10) des Okulartubus erzeugt, ein weiteres Strahlteilerprisma (22) angeordnet. Durch dieses Prisma (22) tritt der Beobachtungsstrahlengang geradlinig hindurch, während der zur Kamera (12) führende Strahlengang an der Teilerfläche und der Basisfläche des Prismas je einmal reflektiert wird. Das Prisma (22) besitzt den gleichen Aufbau wie das Prisma (16) und ist ebenfalls auf einem Schieber (25) aufgenommen, mit dem auf freien Durchgang in den Binokulartubus (9) geschaltet werden kann.

Es ist nicht unbedingt erforderlich, die Ausspiegelung in den Photostrahlengang P1 bzw. in den zusätzlichen Bildausgang (11) und die Strahlumlenkung in die Horizontale bzw. die Vertikale durch die dargestellten einteiligen Spiegelprismen (16) bzw. (22) vorzunehmen. Vielmehr ist es auch möglich, für die auf die Teilerfläche folgende Strahlumlenkung einen separaten Spiegel (119) vorzusehen, wie das in dem alternativen Ausführungsbeispiel nach Figur 3 dargestellt ist. Das Prisma (116) besitzt dann allein die Funktion eines Strahlteilers.

Diese Lösung bietet sich an, wenn an der Stelle, an der der Photostrahlengang aus dem Beobachtungsstrahlengang ausgespiegelt wird, genügend Platz vorhanden ist. Im Material für das Strahlteilerprisma (116) ist man dann nicht auf höherbrechende Gläser eingeschränkt, da über die Dicke des Prisma (116) der eintretende-und austretende Strahl ausreichend voneinander separiert werden können.

## Patentansprüche

1. Inverses Mikroskop mit einem durch einen hinter einer Tubuslinse angeordneten Reflektor umgelenkten, diagonal nach oben in Richtung auf den Betrachter verlaufenden Beobachtungsstrahlengang (B) und mindestens einem in das Gehäuse des Mikroskops integrierten Photostrahlengang (P1), wobei die Ausspiegelung des Photostrahlenganges (P1) durch ein optisches Element (16; 116) erfolgt, das in Lichtrichtung gesehen hinter dem den Beobachtungsstrahlengang umlenkenden Reflektor (14) im diagonal verlaufenden Teil des Beobachtungssstrahlenganges angeordnet ist, wobei das optische Element (16; 116) ein Strahlteiler ist und auf einem Schieber (15) oder Revolver mit mindestens zwei Schaltstellungen in der Nähe der von der Tubuslinse erzeugten Zwischenbildebene angeordnet ist und wobei der Schieber (15) oder Revolver mit einer in die Zwischenbildebene einschaltbaren Formatstrichplatte (18) oder Fokussierhilfe gekoppelt ist.

2. Inverses Mikroskop nach Anspruch 1, dadurch gekennzeichnet, daß in Lichtrichtung gesehen hinter der Zwischenbildebene eine einen telezentrischen Strahlengang erzeugende Optik (20) vorgesehen ist.

3. Inverses Mikroskop nach Anspruch 2, dadurch gekennzeichnet, daß ein abnehmbarer Wechseltubus (8) mit einer zweiten Tubuslinse (21) vorgesehen ist.

4. Inverses Mikroskop nach einem der Ansprüche 1-3, dadurch gekennzeichnet, daß das optische Element (16; 116) ein Teilerprisma ist, durch das der Beobachtungsstrahlengang geradlinig hindurchtritt.

5. Inverses Mikroskop nach Anspruch 4, dadurch gekennzeichnet, daß das Teilerprisma (16) den ausgespiegelten Photostrahlengang (P1) durch nochmalige Reflexion vorzugsweise in eine horizontale oder vertikale Richtung umlenkt.

6. Inverses Mikroskop nach Anspruch 1, dadurch gekennzeichnet, daß in einer Schaltstellung des Schiebers (15) oder Revolvers alles Licht allein in den Beobachtungsstrahlengang (B) durchgelassen ist.

7. Inverses Mikroskop nach Anspruch 4, dadurch gekennzeichnet, daß das Teilerprisma (16) aus Glas mit einem Brechungsindex von wenigstens 1,55 besteht.

8. Inverses Mikroskop nach einem der Ansprüche 1-6, dadurch gekennzeichnet, daß der Beobachtungsstrahlengang unter einem Winkel von vorzugsweise 45° gegen die Vertikal verläuft.

9. Inverses Mikroskop nach einem der Ansprüche 1-7, dadurch gekennzeichnet, daß im Beobachtungsstrahlengang (B) vor dem Binokulartubus (9) ein zweites, zur Ausspiegelung in Richtung auf einen weiteren Bildausgang dienendes optisches Element (22) angeordnet ist.

10. Inverses Mikroskop nach Anspruch 9, dadurch gekennzeichnet, daß das zweite optische Element ein Teilerprisma (22) ist, durch das der Beobachtungsstrahlengang (B) geradlinig hindurchtritt.

11. Inverses Mikroskop nach Anspruch 10, dadurch gekennzeichnet, daß das zweite Teilerprisma (22) den ausgespiegelten Teilstrahlengang (P2) durch nochmalige Reflexion in die vertikale Richtung umlenkt.

## Claims

1. Inverted microscope with an observation beam path (B) being deflected by a reflector arranged downstream of a tube lens diagonally upwards in the direction of an observer and with at least one photographic beam path (P1) integrated into the housing of the microscope whereby the deflection into the photographic beam path (P1) takes place by an optical element (16; 116) which is arranged, in the direction of light, downstream of the reflector (14) deflecting the observation beam path within the diagonally extending portion of the observation beam path, whereby the optical element (16; 116) is a beam splitter and is arranged in the neighbourhood of the intermediate image plane generated by said tube lens on a slide (15) or turret of at least two switching positions and whereby said slide (15) or turret is couple to a reticle plate (18) or focussing aid which can be positioned into the intermediate image plane.

2. Inverted microscope of claim 1, characterized in that an optic (20) generating a telecentric beam path is provided, in the direction of light, downstream of the intermediate image plane.

3. Inverted microscope of claim 2, characterized in that a detachable interchangeable tube (8) with a second tube lens (21) is provided.

4. Inverted microscope of one of the claims 1 to 3, characterized in that the optical element (16; 116) is a beam splitting prism to which the observation beam path travels in a straight line.

5. Inverted microscope of claim 4, characterized in that the beam splitting prism (16) deflects the deflected photographic beam path (P1) by a further reflection preferably in the horizontal or vertical direction.

6. Inverted microscope of claim 1, characterized in that in at least one switching position of the slide (15) or turret the complete light is passed into the observation beam path (B).

7. Inverted microscope of claim 4, characterized in that the beam splitting prism (16) is comprised of glass having an index of refraction of at least 1.55.

8. Inverted microscope of one of the claim 1 to 6,
characterized in that the observation beam path extends diagonally upward at an angle preferably 45° to the vertical.

9. Inverted microscope of one of the claim 1 to 7,
characterized in that a second optical element (22) is arranged within the observation beam path (B) in front of the binocular tube (9) which second optical element serving for deflecting light to a further image port.

10. Inverted microscope of claim 9, characterized in that the second optical element is a beam splitter prism (22) through which the observation beam path (B) travels in a straight line.

11. Inverted microscope of claim 10, characterized in that the second beam splitting prism (22) deflects the deflected partial beam path (B2) by a further reflection into the vertical direction.

## Revendications

1. Microscope inversé comportant un trajet lumineux d'observation (B) dévié par un réflecteur disposé derrière une lentille de tube qui l'oriente diagonalement vers le haut, en direction de l'observateur et au moins un trajet lumineux photo (P1) intégré au microscope, où le faisceau lumineux photo (P1) est défléchi par un élément optique (16; 116) situé en aval du réflecteur (14) déviant le trajet lumineux d'observation, dans la section diagonale de celui-ci, ledit élément optique (16; 116) étant constitué par un diviseur de faisceau disposé sur un coulisseau (15) ou un dispositif à revolver commutable dans au moins deux positions, à proximité du plan de l'image intermédiaire formée par la lentille de tube, et où ledit coulisseau (15) ou ledit revolver est accouplé à un réticule à format (18) ou à une lame de mise au point intercalable dans le plan d'image intermédiaire.

2. Microscope inversé selon la revendication 1, caractérisé en ce qu'une optique (20) produisant un trajet lumineux télécentrique est prévue en aval du plan d'image intermédiaire.

3. Microscope inversé selon la revendication 2, caractérisé en ce qu'il comporte un tube amovible et échangeable (8) doté d'une seconde lentille de tube (21).

4. Microscope inversé selon l'une des revendications 1 à 3, caractérisé en ce que l'élément optique (16; 1 16) est un prisme diviseur de faisceau qui est traversé en ligne droite par le trajet lumineux d'observation.

5. Microscope inversé selon la revendication 4, caractérisé en ce que le prisme diviseur (16) réoriente le faisceau lumineux photo défléchi (P1) par une nouvelle réflexion dans une direction de préférence horizontale ou verticale.

6. Microscope inversé selon la revendication 1, caractérisé en ce que toute la lumière est transmise dans le trajet lumineux d'observation (B) dans l'une des positions du coulisseau (15) ou du dispositif à revolver.

7. Microscope inversé selon la revendication 4, caractérisé en ce que le prisme diviseur (16) est composé d'un verre dont l'indice de réfraction est d'au moins 1,55.

8. Microscope inversé selon l'une des revendications 1 à 6, caractérisé en ce que le trajet lumineux d'observation forme de préférence un angle de 45° avec la verticale.

9. Microscope inversé selon l'une des revendications 1 à 7, caractérisé en ce qu'un second élément optique (22) destiné à alimenter une autre sortie d'image est aménagé dans le trajet lumineux d'observation (B) devant le tube binoculaire (9).

10. Microscope inversé selon la revendication 9, caractérisé en ce que le second élément optique est un prisme diviseur (22) qui est traversé en ligne droite par le trajet lumineux d'observation (B).

11. Microscope inversé selon la revendication 10, caractérisé en ce que le second prisme diviseur (22) réoriente le faisceau lumineux partiel défléchi (P2) par une nouvelle réflexion en direction verticale.
